# EUROPÄISCHE PATENTSCHRIFT

(11) **EP 1 546 829 B1**
(45) Veröffentlichungstag und Bekanntmachung des Hinweises auf die Patenterteilung: **01.12.2010**
(21) Anmeldenummer: 03747965.6
(22) Anmeldetag: 04.09.2003
(51) Int. Cl.: G05D 1/02, G06K 9/32

(54) **VERFAHREN UND VORRICHTUNG ZUR ERMITTLUNG DES FAHRZEUGUMFELDES**
METHOD AND DEVICE FOR DETERMINING THE ENVIRONMENT OF A VEHICLE
PROCEDE ET DISPOSITIF POUR DETERMINER L'ENVIRONNEMENT D'UN VEHICULE

(30) Priorität: 27.09.2002 DE 10245428; 20.02.2003 DE 10308168
(43) Veröffentlichungstag der Anmeldung: 29.06.2005
(73) Patentinhaber: Volkswagen Aktiengesellschaft, 38436 Wolfsburg (DE)
(72) Erfinder: KIRCHNER, Alexander, 38448 Wolfsburg (DE); MEINECKE, Marc-Michael, 38524 Sassenburg (DE)
(74) Vertreter: Patentanwälte Bressel und Partner
(86) Internationale Anmeldenummer: PCT/EP2003/009840
(87) Internationale Veröffentlichungsnummer: WO 2004/031877

(56) Entgegenhaltungen:
- EP-A- 0 301 586
- EP-A- 0 358 628
- EP-A- 0 363 339
- EP-A- 1 220 182
- WO-A-89/01850
- DE-A- 19 845 568
- SCHMID M: "An approach to model-based 3-D recognition of vehicles in real time by machine vision" INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CONFERENCE ON MUNICH, GERMANY 12-16 SEPT. 1994, NEW YORK, NY, USA,IEEE, 12. September 1994 (1994-09-12), Seiten 2064-2071, XP010142025 ISBN: 0-7803-1933-8

## Beschreibung

Die Erfindung bezieht sich auf ein Verfahren und eine Vorrichtung zur Ermittlung des Fahrzeugumfeldes.

Im Rahmen der Weiterentwicklung des Automobils genießt das Thema Sicherheit ein herausragende Bedeutung. Nachdem die passive Sicherheit das Verletzungsrisiko der Insassen bei einem Unfall dramatisch gesenkt hat, rückt nun zunehmend die aktive Sicherheit ins Blickfeld. Aktive Sicherheit verspricht einen weiter verbesserten Schutz der Insassen als auch der anderen am Unfall beteiligten Verkehrsteilnehmer, indem bereits im Vorfeld des Unfalls geeignete Schutzmaßnahmen ausgeführt werden. Diese reichen von der Vorspannung entsprechende Systeme für eine schnellere Reaktion im Crash-Fall bis hin zur automatischen Unfallvermeidung. Allen Maßnahmen ist gemeinsam, dass sie für eine Auslösung eine Kenntnis des Fahrzeugumfeldes benötigen, die je nach Komplexität der auszulösenden Reaktion eine hinreichende Informationsdichte und -güte besitzen muss.

Aus der DE 198 45 568 A1 ist eine Vorrichtung und ein Verfahren zur Erfassung und Verfolgung von Objekten im Fahrzeugumfeld bekannt. Dabei wird zunächst ein Fahrzustand eines Fahrzeugs anhand interner Sensoren, beispielsweise Gierratensensoren oder Tachometer, ermittelt. Auf Basis dieser Daten werden die externen Sensoren (Radar, Laser, etc.) entsprechend des ermittelten Fahrzustands eingestellt. Dafür werden beispielsweise die Reichweite und/oder eine gewünschte Abtastrate geeignet gewählt. Das Fahrzeugumfeld wird mit den derart eingestellten und justierten externen Sensoren abgetastet und die von den externen Sensoren ermittelten Daten werden an eine zentrale Auswerteeinheit übermittelt. In der Auswerteeinheit wird anhand der Daten eine Bewertung der Fahrsituation unter Berücksichtung des internen Fahrzustands und des Fahrzeugumfelds durchgeführt, wobei Objekte und deren Bewegung im Fahrzeugumfeld detektiert werden. So ermittelte Informationen werden verwendet, um gezielt externe Sensoren zur Bewertung auszuwählen und zu justieren, so dass eine Bewertung der Fahrsituation sukzessive verbessert werden kann.

Informationen über die Fahrsituation, d.h. das Fahrzeugumfeld, das Fahrzeug und den Fahrer, werden beispielsweise in Fahrerassistenz-Applikationen verwendet. Dabei ist es bekannt, durch Sensoren eine Fahrsituation zu Erfassen, die Fahrsituation durch Fahrschlauchprädiktion oder Zielauswahl zu analysieren und anschließende Aktionen beispielsweise durch eine Fahrzeugregelung entsprechend durchzuführen. Zukünftige Fahrerassistenzsysteme werden beispielsweise eine Längsregelung, z.B. eine Abstandregelung oder "Stop & Go"-Regelung, eine Querregelung, z.B. Heading Control, kombinierte Längs- und Querreglungen, z.B. Stauassistenten, oder Sicherheitsfunktionen, z.B. automatische Notbremsungen, umfassen. Um diese Aufgaben nutzergerecht zu erfüllen, ist eine hohe Zuverlässigkeit und eine hohe Informationsgüte notwendig. Um die Anforderungen an die Zuverlässigkeit zu erfüllen, ist es bekannt eine Vielzahl an Sensoren im Fahrzeug einzusetzen, ein sogenanntes Multi-Sensor-System. Werden für die Erfassung von Daten mehrere Sensoren eingesetzt, so arbeiten diese redundant, kooperativ, komplementär und/oder mit unterschiedlicher Verarbeitungstiefe.

Eine Zusammenfassung oder Verknüpfung von Messdaten mehrer Datenquellen zu einer gemeinsamen Beschreibung wird allgemein als Sensorfusion bezeichnet. Im Bereich der Automobiltechnik ist eine Sensorfusion beispielsweise aus J. Langheim: "CARSENSE - New Environment Sensing for Advanced Driver Assistance Systems"; In: Proc. of the IEEE Intelligent Vehicle Symposium 2001 bekannt. Dabei ist ein System zu Erfassung des Fahrzeugumfeldes durch Laser, Radar und Video beschrieben, wobei die unterschiedlichen Sensoren mit einer zentralen Fusionseinheit kommunizieren. Die physikalischen Eigenschaften der unterschiedlichen Sensorkonzepte bleiben jedoch in der Fusion unberücksichtigt.

Bekannte Berücksichtigungen der physikalischen Eigenschaften führen zu einer starken Abhängigkeit der eingesetzten Sensorik und daher zu einer Inflexibilität des Systems.

Aus dem Fachartikel Schmid M., "An approach to model-based 3-D recognition of vehicles in real time by machine vision" INTELLIGENT ROBOTS AND SYSTEMS '94. 'ADVANDED ROBOTIC SYSTEMS AND THE REAL WORLD', IROS '94. PROCEEDINGS OF THE IEEE/RSJ/GI INTERNATIONAL CONFERENCE MUNICH; GERMANY 12-16 SEPT. 1994, Seiten 2064-2071 ist ein Verfahren bekannt, bei dem Objekte aus monokularen Bildsequenzen detektiert werden. Hierzu werden Merkmale extrahiert, einem Fahrzeugmodell assoziiert und das Modell damit über die Zeit verfolgt. Das Modell für Fahrzeuge enthält deren Kanten und Dynamik, wobei als Sensor ein Kamerasensor vorgeschlagen wird.

Der Erfindung liegt daher das technische Problem zugrunde, ein echtzeitfähiges Verfahren und eine echtzeitfähige Vorrichtung zur Ermittlung eines Fahrzeugumfeldes durch Sensoren zu schaffen, welche eine hohe Informationsgüte und eine hohe Flexibilität aufweisen.

Die Lösung des Problems ergibt sich durch die Gegenstände mit den Merkmalen der Patentansprüche 1 und 10. Weitere vorteilhafte Ausgestaltungen der Erfindung ergeben sich aus den Unteransprüchen.

In einem Fahrzeugumfeld befindliche Objekte werden durch ein Situationsmodell in einer Auswerteeinheit anhand von Objektdaten ermittelt. Hierfür wird das Fahrzeugumfeld durch externe Sensoren abgetastet, die Messdaten der externen Sensoren werden an Sensoreinheiten übertragen und mit Erwartungsdaten der Messdaten assoziiert, wobei assoziierte Umfeld-Merkmale unter Berücksichtigung der physikalischen Eigenschaften der zugeordneten externen Sensoren ermittelt werden. Objektdaten werden in Abhängigkeit der assoziierten Umfeld-Merkmale bestimmt. Externe Sensoren zum Abtasten des Fahrzeugumfeldes, wie Radar, Laser oder Bildverarbeitungssysteme, befinden sich dezentral im Fahrzeug und erfassen jeweils Ausschnitte aus der Umgebung, wie z.B. Reflexionspunkte von Fahrzeugen (Radar) oder Objektkonturen (Laser). Die Sensoreinheiten bilden eine Schnittstelle zwischen den Sensoren und der Auswerteeinheit. In den Sensoreinheiten liegen Sensormodelle vor, welche die physikalischen Eigenschaften des jeweiligen Sensors nachbilden. Die strikte Trennung des sensorunabhängigen Situationsmodells in der Auswerteeinheit und der Sensoren durch die Zwischenschaltung der Sensoreinheiten bewirkt eine große Flexibilität hinsichtlich der verwendbaren Sensorik. Ein neuer Sensor kann mittels einer Sensoreinheit mit passendem Sensormodell in die bestehende Struktur eingepasst werden. Dieses gilt ebenso für unterschiedliche Verarbeitungsebenen in den Sensoren. Da die Sensoreigenschaften durch die Sensoreinheiten abstrahiert werden, können sowohl Sensoren mit einer hohen Vorverarbeitungstiefe als auch Rohdaten eingebracht werden. Je nach Verarbeitungstiefe und Rechenkapazität der einzelnen Sensoren, können die Sensoreinheiten beliebig dezentral in den Sensoren vorliegen als auch zentral als gemeinsame Recheneinheit. Die Zwischenschaltung der Sensoreinheiten ist weiter für eine Synchronisation der Datenaufnahme nutzbar. Daher ist auch eine Verwendung asynchroner Sensoren möglich. Die Verarbeitung der Sensordaten in den Sensoreinheiten kann parallel erfolgen.

Dabei werden die ersten Objektdaten durch Verknüpfung von mindestens zwei assoziierten Umfeld-Merkmalen ermittelt. Die assoziierten Umfeld-Merkmale werden unter Berücksichtigung der jeweiligen Sensoreigenschaften ermittelt. Vorzugsweise liefern die Sensoreinheiten normierte assoziierte Umfeld-Merkmale. Verschiedene assoziierte Umfeld-Merkmale sind dann durch bekannte Verfahren verknüpfbar ohne dass die Herkunft der Daten zu berücksichtigen ist.

In einer weiteren Ausführungsform wird durch die Auswerteeinheit mindestens ein im Fahrzeugumfeld befindliches Objekt anhand von zweiten Objektdaten ermittelt, wobei durch mindestens eine Sensoreinheit aus nicht assoziierten Umfeld-Merkmalen Objekthypothesen generiert werden und zweite Objektdaten aus Objekthypothesen ermittelt werden. Erwartungsdaten der Sensordaten sind beispielsweise im Falle eines Radarsensors bestimmte Reflexionspunkte an einem Objekt. Dabei sind die Eigenschaften des Sensors bezüglich Messgenauigkeit, Detektionswahrscheinlichkeit usw. berücksichtigbar. Auch Umwelteinflüsse beispielsweise bezüglich einer Lasersensorik können in den entsprechenden Sensoreinheiten berücksichtigt werden. Ist keine Zuordnung der erfassten Sensordaten zu den Erwartungsdaten möglich, so werden aus den erfassten Sensordaten Objekthypothesen gebildet. Diese können wiederum mit Objekthypothesen anderer Sensoren oder mit weiteren Informationen des Situationsmodells verglichen werden und dadurch neue Objekte im Fahrzeugumfeld detektiert werden.

In einer weiteren Ausführungsform werden die Erwartungsdaten von mindestens einem im Fahrzeugumfeld befindlichen Objekt durch die Auswerteeinheit ermittelt und den Sensoreinheiten übermittelt, wobei durch die Auswerteeinheit eine Klassifizierung in und/oder eine Verwerfung von Objektmodellen durchgeführt wird. Anhand von Objektmodellen werden an die Auswerteeinheit übermittelte Messdaten als im Fahrzeugumfeld befindliche Objekte klassifiziert. Anhand der Klassifizierung der Objekte werden Erwartungsdaten und deren Zuordnung zu tatsächlichen Messdaten generiert und an die Sensoreinheiten übermittelt. Auf diese Weise können sensorspezifische Eigenschaften in vollem Umfang für die Verknüpfung genutzt werden. Im Gegensatz zu anderen Verfahren, bei denen die Zuordnung in dem in der Auswerteeinheit verwendeten Situationsmodell erfolgt. Können Erwartungsdaten nicht mit den Messdaten assoziiert werden, so wird durch die Auswerteeinheit eine Verwerfung bereits erstellter Objektmodelle und/oder eine Klassifizierung neuer Objektmodelle geprüft und gegebenenfalls durchgeführt. Für die Klassifizierung bestimmter Objekte können im Vorfeld geeignete Kriterien gefunden werden.

In einer weiteren Ausführungsform werden die Erwartungsdaten durch eine Vorausschau ermittelt. Durch ein dynamisches Situationsmodell ist eine Voraussage der Erwartungswerte möglich. Die Objekte werden dabei durch eine Verteilungsfunktion der Zustände und dem dynamischen Situationsmodell beschrieben. Sobald neue Messdaten eintreffen, werden anhand der Messzeit die Objekte auf den Messzeitpunkt vorhergesagt.

In einer weiteren Ausführungsform wird durch die Auswerteeinheit mindestens ein im Fahrzeugumfeld befindliches Objekt anhand von dritten Objektdaten ermittelt, wobei dritte Objektdaten direkt von der Sensoreinheit unter Berücksichtigung der physikalischen Eigenschaften des zugehörigen Sensors und/oder eines Erwartungswertes bestimmt werden. Nicht alle Objekte verlangen für eine Erkennung eine Verknüpfung verschiedener Sensoren. Die Objektdaten derartiger Objekte werden direkt von den Sensoreinheiten erkannt und an das Situationsmodell in der Auswerteeinheit übertragen.

In einer weiteren Ausführungsform werden die Objektdaten in der Auswerteeinheit durch ein Filter verknüpft, wobei mindestens ein Abstand und/oder eine Relativgeschwindigkeit eine Objektes zu dem Fahrzeug erfasst wird. Die Verknüpfung arbeitet bevorzugt auf Basis einer erweiterten Kalmanfilterung, bei der das Simulationsmodell aus einer Anzahl klassifizierter Objekte gebildet wird. Es sind jedoch auch andere Verfahren der Sensorfusion als Verknüpfungsmethode denkbar, beispielsweise die Bayes-Methode oder das Verfahren der kleinsten Fehlerquadrate.

In einer weiteren Ausführungsform wird ein Fahrzustand des Fahrzeugs durch mindestens einen internen Sensor erfasst, wobei dem internen Sensor ein Sensoreinheit zugeordnet ist, der interne Sensor Messdaten an die Sensoreinheit überträgt und durch die Sensoreinheit mindestens ein Umfeld-Merkmal ermittelt wird. Interne Sensoren sind beispielsweise Fahrzeugssensoren (Gierratensensor, Tachometer, ...) oder Mensch-Maschine-Schnittstellen-Sensoren (Blinker, Gaspedalstellung, ...). Das Situationsmodell der Auswerteeinheit erhält die zugeordneten Umfeld-Merkmale und aktualisiert die Objekte, z.B. die Fahrzeuge im Fahrzeugumfeld, mit Hilfe geeigneter Algorithmen wie beispielsweise einer Kalman-Filterung für eine Verfolgung von Objekten. Durch externe Sensoren erhält die Auswerteeinheit allgemein Informationen über die Infrastruktur, wie Fahrbahn, Leitplanken, Schilder, Ampeln usw., die Verkehrsteilnehmer, wie Fahrzeuge, Radfahrer, Fußgänger usw.. und Hindernisse, wie Bäume, Häuser usw. Interne Sensoren liefern Informationen über das eigene Fahrzeug inklusive dem Fahrer und ggf. dessen Absichten. Darüber hinaus ist es auch denkbar, Informationen von anderen Verkehrsteilnehmern, der Infrastruktur oder aus Navigationssystemen zu verwenden.

In einer weiteren Ausführungsform werden durch die Auswerteinheit Daten an ein Fahrerassistenz-Programm übermittelt.

In einer weiteren Ausführungsform erfolgt durch die Sensoren eine Vorverarbeitung der Messdaten. Dabei ist es denkbar, dass die Sensoren sich selbsttätig an Entfernungen etc. anpassen.

Die Erfindung wird nachfolgend anhand eines bevorzugten Ausführungsbeispiels näher erläutert. Die Figuren zeigen:
- Fig.1: ein schematisches Blockschaltbild einer Vorrichtung zur Ermittlung des Fahrzeugumfelds und
- Fig.2: ein schematisches Blockschaltbild einer Sensoreinheit und einer Auswerteeinheit zur Ermittlung des Fahrzeugumfelds.

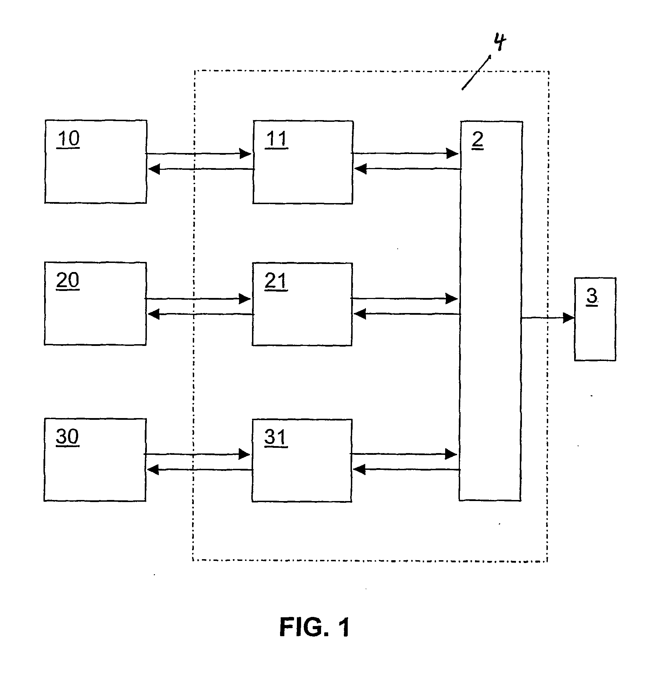

Fig. 1 zeigt schematisch eine Vorrichtung zur Ermittlung eines Fahrzeugumfeldes umfassend drei Sensoren 10, 20, 30, welchen jeweils eine Sensoreinheit 11, 21, 31 zugeordnet ist, und eine Auswertungseinheit 2, durch welche Daten für eine Applikation 3 ermittelt werden. Als Sensoren 10, 20, 30 sind beispielsweise ein Radarsensor, ein Lasersensor und/oder eine Videokamera denkbar. Die Sensoren 10, 20, 30 sowie verwendete Aktuatoren und/oder Steuergeräte sind in einem Fahrzeug verteilt angeordnet und durch einen Datenbus, beispielsweise einen CAN-Bus, verbunden. Die Datenerfassung der Sensoren 10, 20, 30 erfolgt vorzugsweise durch die jeweilige Sensoreinheit 11, 21, 31, wobei die Systemzeit zentral von der Auswerteeinheit 2 an die Sensoreinheiten 11, 21, 31 verteilt wird. Dadurch lassen sich auch Sensordaten asynchroner Sensoren 10, 20, 30 miteinander verknüpfen. Die durch Sensoren erfassten Messdaten werden über den Datenbus an Sensoreinheiten 11, 21, 31 übermittelt. Die Sensoreinheiten 11, 21, 31 sind zusammen mit der Auswerteeinheit 2 auf einem gemeinsamen Rechenmittel 4 integriert. Daneben ist es auch denkbar, die Sensoreinheiten 11, 21, 31 räumlich an den Sensoren 10, 20, 30 anzuordnen und/oder in diese zu integrieren.

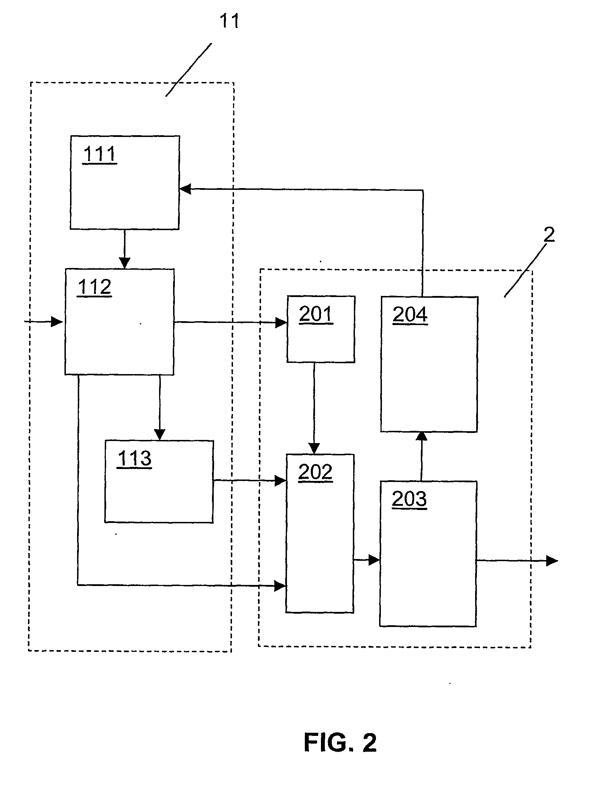

Fig. 2 zeigt schematisch die Sensoreinheit 11, umfassend eine Prädiktion 111, eine Assoziation 112 und eine Instanziierung 113, und die Auswerteeinheit 2, umfassend einen Filter 201, eine Bewertung 202, ein Situationsmodell 203 und eine Zeit-Prädiktion 204. In der Sensoreinheit 11 sind durch ein Sensormodell die physikalischen Eigenschaften des in Fig. 1 dargestellten Sensors 10 beschrieben. Das Sensormodell umfasst mindestens die Signalverarbeitungseigenschaften des Sensors 10 und dessen Tracking-Eigenschaften hinsichtlich des in der Auswerteeinheit 2 verwendeten Situationsmodells 203. In der Prädiktion 111 werden die von der Auswerteeinheit 2 an die Sensoreinheit 11 übermittelten Erwartungsdaten für ein im Fahrzeugumfeld befindliches Objekt entsprechend der Eigenschaften des zugehörigen Sensors 2 aufbereitet. Dabei werden Mehrfachprädiktionen oder Unsicherheiten berücksichtigt. Die aufbereiteten Erwartungsdaten werden an die Assoziation 112 übertragen und mit tatsächlichen Messdaten assoziiert und ggf. priorisiert. Erfolgreiche Zuordnungen liefern sogenannte assoziierte Umfeld-Merkmale. Diese werden an die Auswerteeinheit 2 übermittelt und in dem Filter 201 mit assoziierten Umfeld-Merkmalen anderer Sensoreinheiten und/oder mit vorhergesagten Umfeld-Merkmalen verknüpft. Wenn Messdaten nicht assoziiert werden können, so werden die nicht assoziierten Merkmale der Instanziierung 113 zugeführt. Durch die Instanziierung 113 werden neue Objekthypothesen erzeugt. Sind die Daten eines Sensors ausreichend, um ein Objekt zu erkennen und zu bewerten, so werden diese Objekte ebenfalls in der Sensoreinheit 11 ermittelt. Die derart ermittelten Objekte, die von der Instanziierung 113 ermittelten Objekthypothesen und die durch Verknüpfung mittels Filter 201 erhaltenen Objekte werden der Bewertung 202 der Auswerteeinheit 2 zugeführt. Durch die Bewertung 202 werden aus ausreichend gestützten Objekthypothesen neue Objekte erkannt und/oder nicht ausreichend gestützte Objekthypothesen verworfen. Alle erkannten Objekte werden an das Situationsmodell 203 übertragen. Das Ergebnis ist eine konsistente Wiedergabe des Fahrzeugumfeldes soweit sie über Sensorik erfassbar ist. Darin enthalten sind z.B. die Positionen anderer Fahrzeuge und deren Dynamik, der eigene Fahrzustand aber auch Informationen über den Fahrer. Ein nicht dargestelltes, mit dem Situationsmodell 203 verbundenes Fahrerassistenzsystem kann anhand dieser Daten eine Situationsanalyse und ggf. eine Situationsextrapolation durchführen, um eine Basis für Aktionsplanung und -durchführung zu gewinnen. Über Anforderungen der Fahrerassistenzsysteme, wie beispielsweise eine Aufmerksamkeitssteuerung, wird die Sensorfusion gesteuert. Informationen über die Objekte werden außerdem der sensorunabhängigen Zeit-Prädiktion 204 zugeführt. In der Zeit-Prädikation 204 wird eine Voraussage über die Position und/oder die Bewegung der im Fahrzeugumfeld befindlichen Objekte ermittelt. Diese Voraussage wird an die Prädiktion 111 der Sensoreinheiten 11 übertragen. In der Prädiktion 111 der Sensoreinheit 11 werden anhand des Sensormodells aus den sensorunabhängigen ObjektVoraussagen sensorabhängige Erwartungswerte der Messdaten ermittelt.

Als externe Sensoren sind ein Radarsensor, ein Lasersensor und eine Videokamera denkbar. Durch den Radarsensor mit einer typischen Frequenz von ca. 77 GHz lassen sich beispielsweise Reflexionspunkte von Objekten in einem Abstand von bis zu 150m erkennen. Mit dem Lasersensor sind Konturen von Objekten erfassbar. Als Videokamera ist entweder ein Mono-Video System denkbar, durch welches eine Spur erkennbar ist, oder ein Stereo-Video-System zur Erkennung dreidimensionaler Gebilde. Wird ein Signal durch den Radarsensor, den Lasersensor und/oder die Videokamera aufgenommen, so erstellt die zugehörige Sensoreinheit in der Instanziierung mindestens eine Objekthypothese, d.h. eine Hypothese über ein im Fahrzeugumfeld befindliches Objekt, welches ein derartiges Signal liefern könnte. Liefert ein Radarsensor ein Signal für einen Reflexionspunkt so ist daraus keine eindeutige Aussage über das zugehörige Objekt machbar. Der Reflexionspunkt kann beispielsweise zu einem Lastwagen, einem PKW oder einem Fahrradfahrer gehören. Außerdem ist seine Position an dem Objekt mehrdeutig, er kann beispielsweise auf einem Nummernschild, einem Außenspiegel etc. liegen. Durch die Instanziierung werden daher verschiedene Objekthypothesen gebildet. Diese Objekthypothesen werden an die zentrale Auswerteeinheit übermittelt. Die Auswerteeinheit bewertet die verschiedenen konkurrierenden Objekthypothesen für eine Ermittlung möglicher, zugehöriger Objekte. Positiv auf die Entscheidung für ein mögliches Objekt wirken sich beispielsweise übereinstimmende Objekthypothesen unterschiedlicher Sensoren aus.

Informationen bezüglich der ermittelten möglichen Objekte werden wieder an die Sensoreinheiten übertragen. In den Sensoreinheiten werden aus den Informationen über mögliche Objekte im Fahrzeugumfeld Erwartungsdaten ermittelt. Die Erwartungsdaten sind die Messdaten, welche der zugehörige Sensor erfassen würde, falls sich ein vermeintliches Objekt tatsächlich in einer vorhergesagten Position befindet. Zur Bestimmung der Erwartungsdaten werden Sensormodelle verwendet. Ein Radar-Sensormodell, welches in einer einem Radar-Sensor zugeordneten Sensoreinheit eingesetzt ist, berücksichtigt beispielsweise eine Vorhersage von Reflexionspunkten eines Fahrzeugs an Ecken, Nummernschild, Außenspiegel, inneren Reflexionspunkten etc., eine örtliche Messgenauigkeit der Reflexionspunkte, Entfernung, Winkel, eine Längsgeschwindigkeit und eine Quergeschwindigkeit. Werden die Objekthypothesen von den anderen Sensoren und/oder den nachfolgenden Messungen unterstützt, so können die entsprechenden Messdaten eindeutig diesem Objekt zugeordnet werden, d.h. es werden sogenannte assoziierte Umfeld-Merkmale erhalten. Mit einem gemeinsamen Objekt assoziierte Umfeld-Merkmale verschiedener Sensoren können dann verknüpft werden. Durch die Assoziierung wird verhindert, das nicht zusammenhängende Messsignale und/oder Daten miteinander verknüpft werden.

Die Auswertung der einzelnen Sensoren bedingt sich teilweise durch die Objektvoraussagen, es bestehen jedoch keine Abhängigkeiten unter den Sensoren. So können beispielsweise durch einen Lasersensor gewonnen Messpunkte zur Stützung einer Disparitätsberechnung eines Stereo-Video-Sensors eingesetzt werden. Die Signalverarbeitung des Stereo-Video-Sensors baut aber nicht unmittelbar auf den Informationen des Lasersensors auf.

## Patentansprüche

1. Verfahren zur Ermittlung des Fahrzeugumfeldes eines Fahrzeugs, umfassend mindestens einen externen Sensor (10, 20, 30), wobei durch den externen Sensor (10, 20, 30) das Fahrzeugumfeld abgetastet wird und dem Sensor (10, 20, 30) mindestens eine Sensoreinheit (11, 21, 31) zugeordnet ist, und eine Auswerteeinheit (2), wobei durch die Auswerteeinheit (2) mindestens ein im Fahrzeugumfeld befindliches Objekt anhand von Objektdaten ermittelt wird,
**dadurch gekennzeichnet, dass**
verschiedene externe Sensoren (10, 20, 30) verwendet werden,
die externen Sensoren (10, 20, 30) Messdaten an die Sensoreinheiten (11, 21, 31) übertragen, wobei in den Sensoreinheiten (11, 21, 31) Sensormodelle vorliegen, die jeweils die physikalischen Eigenschaften des jeweiligen Sensors (10, 20, 30) nachbilden,
die Sensoreinheiten (11, 21, 31) assoziierte Umfeld-Merkmale ermitteln, wobei die Messdaten mit Erwartungsdaten der Messdaten assoziiert werden und dabei mindestens die physikalischen Eigenschaften des zugeordneten externen Sensors (10, 20, 30) berücksichtigt werden,
erste Objektdaten durch Verknüpfung von mindestens zwei assoziierten Umfeld-Merkmalen verschiedener Sensoreinheiten (11, 21, 31) bestimmt werden und
in der Auswerteeinheit (2) zur Auswertung der Objektdaten ein sensorunabhängiges Situationsmodell verwendet wird.

2. Verfahren nach Anspruch 1, **dadurch gekennzeichnet, dass** durch die Auswerteeinheit (2) mindestens ein im Fahrzeugumfeld befindliches Objekt anhand von zweiten Objektdaten ermittelt wird, wobei durch mindestens eine Sensoreinheit (11, 21, 31) aus nicht assoziierten Umfeld-Merkmalen mindestens eine Objekthypothese generiert wird und die zweiten Objektdaten aus der Objekthypothese ermittelt werden.

3. Verfahren nach einem der Ansprüche 1 oder 2, **dadurch gekennzeichnet, dass** Erwartungsdaten von mindestens einem im Fahrzeugumfeld befindlichen Objekt durch die Auswerteeinheit (2) ermittelt werden und den Sensoreinheiten (11, 21, 31) übermittelt werden, wobei durch die Auswerteeinheit (2) eine Klassifizierung in und/oder eine Verwerfung von Objektmodellen durchgeführt wird.

4. Verfahren nach Anspruch 3, **dadurch gekennzeichnet, dass** die Erwartungsdaten durch eine Vorausschau ermittelt werden.

5. Verfahren nach einem der genannten Ansprüche, **dadurch gekennzeichnet, dass** durch die Auswerteeinheit (2) mindestens ein im Fahrzeugumfeld befindliches Objekt anhand von dritten Objektdaten ermittelt wird, wobei dritte Objektdaten direkt von der Sensoreinheit (11, 21, 31) unter Berücksichtigung der physikalischen Eigenschaften des zugehörigen Sensors (10, 20, 30) und/oder eines Erwartungswertes bestimmt werden.

6. Verfahren nach einem der genannten Ansprüche, **dadurch gekennzeichnet, dass** die Objektdaten in der Auswerteeinheit (2) durch ein Filter (201) verknüpft werden, wobei mindestens ein Abstand und/oder eine Relativgeschwindigkeit eines Objektes zu dem Fahrzeug erfasst wird.

7. Verfahren nach einem der genannten Ansprüche, **dadurch gekennzeichnet, dass** ein Fahrzustand des Fahrzeugs durch mindestens einen internen Sensor erfasst wird, wobei dem internen Sensor ein Sensoreinheit zugeordnet ist, der interne Sensor Messdaten an die Sensoreinheit überträgt und durch die Sensoreinheit mindestens ein assoziiertes Umfeld-Merkmal und/oder eine Objekthypothese ermittelt wird.

8. Verfahren nach einem der genannten Ansprüche, **dadurch gekennzeichnet, dass** durch die Auswerteinheit (2) Daten an ein Fahrerassistenz-Programm übermittelt werden.

9. Verfahren nach einem der genannten Ansprüche, **dadurch gekennzeichnet, dass** durch die Sensoren (10, 20, 30) eine Vorverarbeitung der Messdaten erfolgt.

10. Vorrichtung zur Ermittlung des Fahrzeugumfeldes eines Fahrzeugs, umfassend mindestens einen externen Sensor (10, 20, 30), wobei durch den externen Sensor (10, 20, 30) das Fahrzeugumfeld abtastbar ist und dem Sensor (10, 20, 30) mindestens eine Sensoreinheit (11, 21, 31) zuordenbar ist, und eine Auswerteeinheit (2), wobei durch die Auswerteeinheit (2) mindestens ein im Fahrzeugumfeld befindliches Objekt anhand von ersten Objektdaten ermittelbar ist,
**dadurch gekennzeichnet, dass**
die Vorrichtung verschiedene externe Sensoren (10, 20, 30) umfasst,
Messdaten von den externen Sensoren (10, 20, 30) an die Sensoreinheiten (11, 21, 31) übertragen werden, wobei in den Sensoreinheiten (11, 21, 31) Sensormodelle vorliegen, die jeweils die physikalischen Eigenschaften des jeweiligen Sensors (10, 20, 30) nachbilden,
durch die Sensoreinheiten (11, 21, 31) assoziierte Umfeld-Merkmale ermittelbar sind, wobei die Messdaten mit Erwartungsdaten der Messdaten assoziierbar sind und dabei mindestens die physikalischen Eigenschaften des zugeordneten externen Sensors (10, 20, 30) berücksichtigt werden,
erste Objektdaten durch Verknüpfung von mindestens zwei der assoziierten Umfeld-Merkmalen verschiedener Sensoreinheiten (11, 21, 31) bestimmbar sind und
in der Auswerteeinheit (2) zur Auswertung der Objektdaten ein sensorunabhängiges Situationsmodell verwendet wird.

11. Vorrichtung nach Anspruch 10, **dadurch gekennzeichnet, dass** durch die Auswerteeinheit (2) mindestens ein im Fahrzeugumfeld befindliches Objekt anhand von zweiten Objektdaten ermittelbar ist, wobei durch mindestens eine Sensoreinheit (11, 21, 31) aus nicht assoziierten Umfeld-Merkmalen Objekthypothesen generierbar sind und die zweiten Objektdaten aus Objekthypothesen ermittelbar sind.

12. Vorrichtung nach Anspruch 10 oder 11, **dadurch gekennzeichnet, dass** Erwartungsdaten von mindestens einem im Fahrzeugumfeld befindlichen Objekt durch die Auswerteeinheit (2) ermittelbar und an die Sensoreinheiten (11, 21, 31) übermittelbar sind, wobei durch die Auswerteeinheit (2) eine Klassifizierung in und/oder eine Verwerfung von Objektmodellen durchgeführt wird.

13. Vorrichtung nach Anspruch 12 **dadurch gekennzeichnet, dass** die Erwartungsdaten durch eine Vorausschau ermittelbar sind.

14. Vorrichtung nach einem Ansprüche 10 bis 13, **dadurch gekennzeichnet, dass** durch die Auswerteeinheit (2) mindestens ein im Fahrzeugumfeld befindliches Objekt anhand von dritten Objektdaten ermittelbar ist, wobei dritte Objektdaten direkt von der Sensoreinheit (11, 21, 31) unter Berücksichtigung der physikalischen Eigenschaften des zugehörigen Sensors (10, 20, 30) und/oder eines Erwartungswertes bestimmbar sind.

15. Vorrichtung nach einem Ansprüche 10 bis 14, **dadurch gekennzeichnet, dass** die Objektdaten in der Auswerteeinheit (2) durch ein Filter (202) verknüpfbar sind, wobei mindestens ein Abstand und/oder eine Relativgeschwindigkeit eines Objektes zu dem Fahrzeug bewertbar sind.

16. Vorrichtung nach einem Ansprüche 10 bis 15, **dadurch gekennzeichnet, dass** ein Fahrzustand des Fahrzeugs durch mindestens einen internen Sensor erfassbar ist, wobei dem internen Sensor ein Sensoreinheit zugeordnet ist, durch den internen Sensor Messdaten an die Sensoreinheit übertragbar sind durch die Sensoreinheit mindestens ein assoziiertes Umfeld-Merkmal und/oder eine Objekthypothese ermittelbar ist.

17. Vorrichtung nach einem Ansprüche 10 bis 16, **dadurch gekennzeichnet, dass** durch die Auswerteinheit (2) Daten an ein Fahrerassistenz-Programm übermittelbar sind.

18. Vorrichtung nach einem Ansprüche 10 bis 17, **dadurch gekennzeichnet, dass** durch die Sensoren (10, 20, 30) eine Vorverarbeitung der Messdaten durchführbar ist.

## Claims

1. Method for determining the environment of a vehicle, comprising at least one external sensor (10, 20, 30), wherein the environment of the vehicle is sensed by the external sensor (10, 20, 30), and the sensor (10, 20, 30) is assigned at least one sensor unit (11, 21, 31), and an evaluation unit (2), wherein the evaluation unit (2) determines at least one object located in the environment of the vehicle on the basis of object data,
**characterized in that**
various external sensors (10, 20, 30) are used,
the external sensors (10, 20, 30) transmit measurement data to the sensor units (11, 21, 31), wherein sensor models, which each model the physical properties of the respective sensor (10, 20, 30), are present in the sensor units (11, 21, 31),
the sensor units (11, 21, 31) determine associated environment features, wherein the measurement data are associated with anticipated data of the measurement data, and in the process at least the physical properties of the assigned external sensor (10, 20, 30) are taken into account,
first object data are determined by logically combining at least two associated environment features of various sensor units (11, 21, 31), and a sensor-independent situation model is used for evaluating the object data in the evaluation unit (2).

2. Method according to Claim 1, **characterized in that** at least one object which is located in the environment of the vehicle is determined by the evaluation unit (2) on the basis of second object data, wherein at least one sensor unit (11, 21, 31) generates at least one object hypothesis from non-associated environment features, and the second object data are determined from the object hypothesis.

3. Method according to one of Claims 1 or 2, **characterized in that** anticipated data for at least one object located in the environment of the vehicle are determined by the evaluation unit (2) and transmitted to the sensor units (11, 21, 31), wherein the evaluation unit (2) carries out a classification in object models and/or discards object models.

4. Method according to Claim 3, **characterized in that** the anticipated data are determined by means of a preview.

5. Method according to one of the preceding claims, **characterized in that** the evaluation unit (2) determines at least one object located in the environment of the vehicle on the basis of third object data, wherein third object data are determined directly by the sensor unit (11, 21, 31) taking into account the physical properties of the associated sensor (10, 20, 30) and/or an anticipated value.

6. Method according to one of the preceding claims, **characterized in that** the object data are logically combined in the evaluation unit (2) by means of a filter (201), wherein at least one distance and/or one relative speed of an object with respect to the vehicle is sensed.

7. Method according to one of the preceding claims, **characterized in that** a driving state of the vehicle is sensed by at least one internal sensor, wherein the internal sensor is assigned a sensor unit, the internal sensor transmits measurement data to the sensor unit, and the sensor unit determines at least one associated environment feature and/or one object hypothesis.

8. Method according to one of the preceding claims, **characterized in that** the evaluation unit (2) transmits data to a driver assistance program.

9. Method according to one of the preceding claims, **characterized in that** the sensors (10, 20, 30) carry out preprocessing of the measurement data.

10. Device for determining the environment of a vehicle, comprising at least one external sensor (10, 20, 30), wherein the environment of the vehicle can be sensed by the external sensor (10, 20, 30), and the sensor (10, 20, 30) can be assigned at least one sensor unit (11, 21, 31), and an evaluation unit (2), wherein the evaluation unit (2) can determine at least one object located in the environment of the vehicle on the basis of first object data,
**characterized in that**
the device comprises various external sensors (10, 20, 30),
measurement data are transmitted from the external sensors (10, 20, 30) to the sensor units (11, 21, 31), wherein sensor models, which each model the physical properties of the respective sensor (10, 20, 30), are present in the sensor units (11, 21, 31),
the sensor units (11, 21, 31) can determine associated environment features, wherein the measurement data can be associated with anticipated data of the measurement data, and in the process at least the physical properties of the assigned external sensor (10, 20, 30) are taken into account,
first object data can be determined by logically combining at least two of the associated environment features of various sensor units (11, 21, 31), and
a sensor-independent situation model is used to evaluate the object data in the evaluation unit (2).

11. Device according to Claim 10, **characterized in that** the evaluation unit (2) can determine at least one object located in the environment of the vehicle on the basis of second object data, wherein at least one sensor unit (11, 21, 31) can generate object hypotheses from non-associated environment features, and the second object data can be determined from object hypotheses.

12. Device according to Claim 10 or 11, **characterized in that** anticipated data for at least one object located in the environment of the vehicle can be determined by the evaluation unit (2) and transmitted to the sensor units (11, 21, 31), wherein the evaluation unit (2) carries out a classification in object models and/or discards object models.

13. Device according to Claim 12, **characterized in that** the anticipated data can be determined by means of a preview.

14. Device according to one of Claims 10 to 13, **characterized in that** the evaluation unit (2) can determine at least one object located in the environment of the vehicle on the basis of third object data, wherein third object data can be determined directly by the sensor unit (11, 21, 31) taking into account the physical properties of the associated sensor (10, 20, 30) and/or an anticipated value.

15. Device according to one of Claims 10 to 14, **characterized in that** the object data can be logically combined in the evaluation unit (2) by means of a filter (202), wherein at least one distance and/or one relative speed of an object with respect to the vehicle can be assessed.

16. Device according to one of Claims 10 to 15, **characterized in that** a driving state of the vehicle can be detected by at least one internal sensor, wherein the internal sensor is assigned a sensor unit, measurement data can be transmitted to the sensor unit by the internal sensor, and the sensor unit can determine at least one associated environment feature and/or one object hypothesis.

17. Device according to one of Claims 10 to 16, **characterized in that** the evaluation unit (2) can transmit data to a driver assistance program.

18. Device according to one of Claims 10 to 17, **characterized in that** the sensors (10, 20, 30) can carry out preprocessing of the measurement data.

## Revendications

1. Procédé de détermination de l'environnement de véhicule d'un véhicule, comprenant au moins un capteur externe (10, 20, 30), l'environnement de véhicule étant balayé par le capteur externe (10, 20, 30) et au moins une unité de détection (11, 21, 31) étant associée au capteur externe (10, 20, 30), et une unité d'interprétation (2), au moins un objet qui se trouve dans l'environnement de véhicule étant déterminé par l'unité d'interprétation (2) au moyen de données d'objet,
**caractérisé en ce que**
différents capteurs externes (10, 20, 30) sont utilisés,
les capteurs externes (10, 20, 30) transmettent des données de mesure aux unités de détection (11, 21, 31), des modèles de capteur étant présents dans les unités de détection (11, 21, 31), lesquels simulent respectivement les propriétés physiques du capteur (10, 20, 30) correspondant,
les unités de détection (11, 21, 31) déterminent des caractéristiques d'environnement associées, les données de mesure étant associées avec des données attendues des données de mesure et au moins les propriétés physiques du capteur externe (10, 20, 30) associé étant ici prises en compte,
des premières données d'objet sont déterminées en combinant au moins deux caractéristiques d'environnement associées d'unités de détection (11, 21, 31) différentes et un modèle de situation indépendante du capteur est utilisé dans l'unité d'interprétation (2) pour interpréter les données d'objet.

2. Procédé selon la revendication 1, **caractérisé en ce qu'**au moins un objet qui se trouve dans l'environnement de véhicule est déterminé par l'unité d'interprétation (2) au moyen de deuxièmes données d'objet, au moins une hypothèse d'objet étant générée par au moins une unité de détection (11, 21, 31) à partir des caractéristiques d'environnement non associées et les deuxièmes données d'objet étant déterminées à partir de l'hypothèse d'objet.

3. Procédé selon l'une des revendications 1 ou 2, **caractérisé en ce que** les données attendues d'au moins un objet qui se trouve dans l'environnement du véhicule sont déterminées par l'unité d'interprétation (2) et sont communiquées aux unités de détection (11, 21, 31), une classification et/ou un rejet des modèles d'objet étant effectué(e)(s) par l'unité d'interprétation.

4. Procédé selon la revendication 3, **caractérisé en ce que** les données attendues sont déterminées par un aperçu préalable.

5. Procédé selon l'une des revendications mentionnées, **caractérisé en ce qu'**au moins un objet qui se trouve dans l'environnement de véhicule est déterminé par l'unité d'interprétation (2) au moyen de troisièmes données d'objet, les troisièmes données d'objet étant déterminées directement par l'unité de détection (11, 21, 31) en tenant compte des propriétés physiques du capteur (10, 20, 30) associé et/ou d'une valeur attendue.

6. Procédé selon l'une des revendications mentionnées, **caractérisé en ce que** les données d'objet sont combinées dans l'unité d'interprétation (2) par un filtre (201), au moins un écart et/ou une vitesse relative d'un objet par rapport au véhicule étant détecté.

7. Procédé selon l'une des revendications mentionnées, **caractérisé en ce qu'**un état de déplacement du véhicule est détecté par au moins un capteur interne, une unité de détection étant associée au capteur interne, le capteur interne transmettant des données de mesure à l'unité de détection et au moins une caractéristique d'environnement associée et/ou une hypothèse d'objet étant déterminée par l'unité de détection.

8. Procédé selon l'une des revendications mentionnées, **caractérisé en ce que** des données sont communiquées à un programme d'assistance du conducteur par l'unité d'interprétation (2).

9. Procédé selon l'une des revendications mentionnées, **caractérisé en ce qu'**un prétraitement des données de mesure est effectué par les capteurs (10, 20, 30).

10. Dispositif de détermination de l'environnement de véhicule d'un véhicule, comprenant au moins un capteur externe (10, 20, 30), l'environnement de véhicule pouvant être balayé par le capteur externe (10, 20, 30) et au moins une unité de détection (11, 21, 31) pouvant être associée au capteur externe (10, 20, 30), et une unité d'interprétation (2), au moins un objet qui se trouve dans l'environnement de véhicule pouvant être déterminé par l'unité d'interprétation (2) au moyen de premières données d'objet,
**caractérisé en ce que**
le dispositif comprend différents capteurs externes (10, 20, 30),
les données de mesure des capteurs externes (10, 20, 30) sont transmises aux unités de détection (11, 21, 31), des modèles de capteur étant présents dans les unités de détection (11, 21, 31), lesquels simulent respectivement les propriétés physiques du capteur (10, 20, 30) correspondant,
des caractéristiques d'environnement associées peuvent être déterminées par les unités de détection (11, 21, 31), les données de mesure pouvant être associées avec des données attendues des données de mesure et au moins les propriétés physiques du capteur externe (10, 20, 30) associé étant ici prises en compte,
des premières données d'objet peuvent être déterminées en combinant au moins deux caractéristiques d'environnement associées d'unités de détection (11, 21, 31) différentes et un modèle de situation indépendante du capteur est utilisé dans l'unité d'interprétation (2) pour interpréter les données d'objet.

11. Dispositif selon la revendication 10, **caractérisé en ce qu'**au moins un objet qui se trouve dans l'environnement de véhicule peut être déterminé par l'unité d'interprétation (2) au moyen de deuxièmes données d'objet, des hypothèses d'objet pouvant être générées par au moins une unité de détection (11, 21, 31) à partir des caractéristiques d'environnement non associées et les deuxièmes données d'objet pouvant être déterminées à partir des hypothèses d'objet.

12. Dispositif selon la revendication 10 ou 11, **caractérisé en ce que** les données attendues d'au moins un objet qui se trouve dans l'environnement du véhicule peuvent être déterminées par l'unité d'interprétation (2) et peuvent être communiquées aux unités de détection (11, 21, 31), une classification et/ou un rejet des modèles d'objet étant effectué(e)(s) par l'unité d'interprétation (2).

13. Dispositif selon la revendication 12, **caractérisé en ce que** les données attendues peuvent être déterminées par un aperçu préalable.

14. Dispositif selon l'une des revendications 10 à 13, **caractérisé en ce qu'**au moins un objet qui se trouve dans l'environnement de véhicule peut être déterminé par l'unité d'interprétation (2) au moyen de troisièmes données d'objet, les troisièmes données d'objet pouvant être déterminées directement par l'unité de détection (11, 21, 31) en tenant compte des propriétés physiques du capteur (10, 20, 30) associé et/ou d'une valeur attendue.

15. Dispositif selon l'une des revendications 10 à 14, **caractérisé en ce que** les données d'objet peuvent être combinées dans l'unité d'interprétation (2) par un filtre (201), au moins un écart et/ou une vitesse relative d'un objet par rapport au véhicule pouvant être évalué (e) (s).

16. Dispositif selon l'une des revendications 10 à 15, **caractérisé en ce qu'**un état de déplacement du véhicule peut être détecté par au moins un capteur interne, une unité de détection étant associée au capteur interne, le capteur interne pouvant transmettre des données de mesure à l'unité de détection et au moins une caractéristique d'environnement associée et/ou une hypothèse d'objet pouvant être déterminée(s) par l'unité de détection.

17. Dispositif selon l'une des revendications 10 à 16, **caractérisé en ce que** des données peuvent être communiquées à un programme d'assistance du conducteur par l'unité d'interprétation (2).

18. Dispositif selon l'une des revendications 10 à 17, **caractérisé en ce qu'**un prétraitement des données de mesure peut être effectué par les capteurs (10, 20, 30).
